# EUROPEAN PATENT SPECIFICATION

(11) **EP 1 526 928 B1**
(45) Date of publication and mention of the grant of the patent: **06.03.2019**
(21) Application number: 02807644.6
(22) Date of filing: 06.08.2002
(51) Int. Cl.: B08B 7/00, F28D 9/00

(54) **METHOD AND APPARATUS FOR REMOVING SUBSTANCES FROM SOLID MATRIX WITH ENERGY SAVING**
VERFAHREN UND VORRICHTUNG ZUM ENTFERNEN VON SUBSTANZEN VON EINER FESTEN MATRIX UNTER ENERGIEEINSPARUNG
PROCEDE ET DISPOSITIF ECONOMES EN ENERGIE POUR ELIMINER DES MATIERES D'UNE MATRICE SOLIDE

(43) Date of publication of application: 04.05.2005
(73) Proprietor: FEDEGARI AUTOCLAVI SPA, I-27010 Albuzzano (PV) (IT)
(72) Inventor: FEDEGARI, Fortunato, I-27100 Pavia (IT); SCULLINO, Andrea, I-20137 Milano (IT); PALLADO, Paolo, I-35132 Padova (IT)
(74) Representative: Dragotti, Gianfranco
(86) International application number: PCT/IT2002/000521
(87) International publication number: WO 2004/012877

(56) References cited:
- WO-A-00/56970
- FR-A- 2 815 559
- GB-A- 1 405 976
- US-A- 5 676 705
- US-A1- 2002 023 662

## Description

The invention relates to the removal of substances such as oils, greases, lubricants, or particulates in general from solid matrices.

As is known, increasing sensitivity to the effects produced by waste and industrial processes on the environment leads to an ever greater need to separate the above-mentioned substances from the solid matrices on which they are deposited, for disposal or recovery.

These matrices are material substrates in general that are impregnated with oil, grease or the like, such as, for example, the turnings resulting from turning operations, which are contaminated by the lubricant liquid used in the cutting operations; in these circumstances, it is necessary to separate the lubricant from the turnings in order to be able to send each of them to subsequent disposal and recovery stages.

A similar situation arises with empty engine-oil containers made of recyclable plastics material.

In this connection, American patent No. 5,711, 829 in the name of Smith et al. describes a method of removing the residual oil present inside the respective packages to permit recovery of the oil as well as of the plastics material.

This method is based on the use of carbon dioxide in the liquid or supercritical state, whose solvent properties with respect to organic substances such as engine oils or other types of oil, have been well known and utilized in many applications for some time.

The method of the above-mentioned American patent is substantially similar to that used for the extraction of essential oils, natural aromas, or other substances (for example caffeine) from seeds, plants, etc.; it provides for the fluid solvent in liquid or supercritical phase, at a temperature of between 20°C and 35°C, to come into contact with the bodies or materials to be treated, which are arranged in a suitable treatment chamber or pressurized container for this purpose.

The carbon dioxide with the organic substances dissolved therein is then expanded and treated thermally so as to create, in a container disposed downstream known as a separator, a liquid phase containing the above-mentioned substances, and a gaseous CO₂ phase; the former collects in the bottom of the container, from which it is then evacuated in order to recover the substances, and the latter is liquefied by compression and cooled before returning to the washing chamber in order to pass over the bodies present therein again.

The International patent application WO 00/56970 discloses an apparatus for cleaning textile objects using a densified, liquid treatment gas, which preferably is constituted by carbon dioxide.

US patent 5,676,705 discloses a method of dry cleaning fabrics using densified carbon dioxide.

An important problem relating to the implementation of known methods consists in effectively removing the substances from the solid matrices, whilst at the same time limiting the energy consumption which is necessary to achieve this result.

This problem has not been addressed satisfactorily in the prior art in general, which instead has concentrated mainly on seeking the best method of separating or removing the desired substances, for example, with the use of additives or other co-solvents, together with CO₂.

The present invention proposes to solve the above-mentioned problem; it therefore has the object of devising a method of removing and separating substances from a solid matrix by means of a gaseous fluid in liquid or even supercritical phase, wherein the mechanical work performed on the fluid in order to compress it can be exploited in an improved manner. This object is achieved by a method in which the heat of condensation (or apart of it) yielded by the fluid in one stage of the operative cycle is used as heat for evaporating the fluid in another stage.

This permits, on the one hand, to cool the operating fluid after its compression during the operating cycle, and on the other hand, to heat it after expansion, by a mutual exchange of heat.

In particular, the present invention consists in a method for the removal of substances comprising lubricating oils or similar organic substances from a solid matrix constituted by swarf from machining operations with carbon dioxide in which the substances are soluble, comprising the steps of:
- washing the solid matrix with carbon dioxide in liquid phase in a container (23, 24), so as to obtain a solution formed by the carbon dioxide with the substances dissolved therein,
- expanding the solution through an expansion valve (28) followed by heating it in a heat exchanger (30) so as to evaporate the carbon dioxide and separate it from the substances dissolved therein in a separator (32),
- compressing the evaporated carbon dioxide through a compressor (36) and cooling it to bring it back to the initial liquid phase,
wherein at least some of the heat supplied to heat the solution and some of the heat removed by cooling the carbon dioxide after compression are obtained by providing for a heat exchange between the respective stages of the cycle, characterized in that the step of the separation of the substances dissolved in the carbon dioxide is carried out with a cyclone separator (32), after the exchange of heat for heating the solution, in accordance with claim 1.

The present invention also consists of an apparatus for carrying out said method in accordance with claim 5.

The features of the method according to the invention and of apparatus for implementing it are set forth in the claims appended to this description.

These features will be better understood in the light of the description given below, relating to a non-limiting embodiment of a cycle for the removal and separation of the lubricant from swarf from machining operations such as turning and the like.

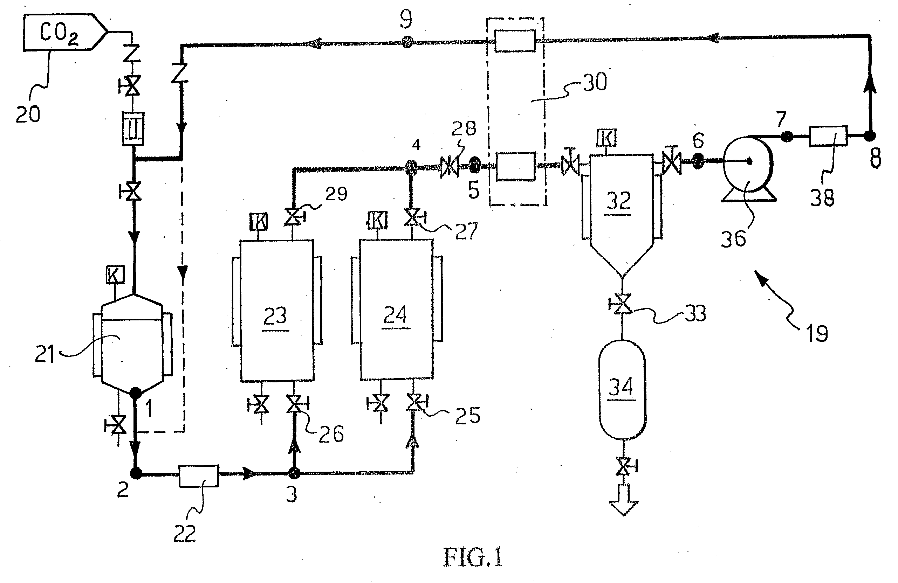

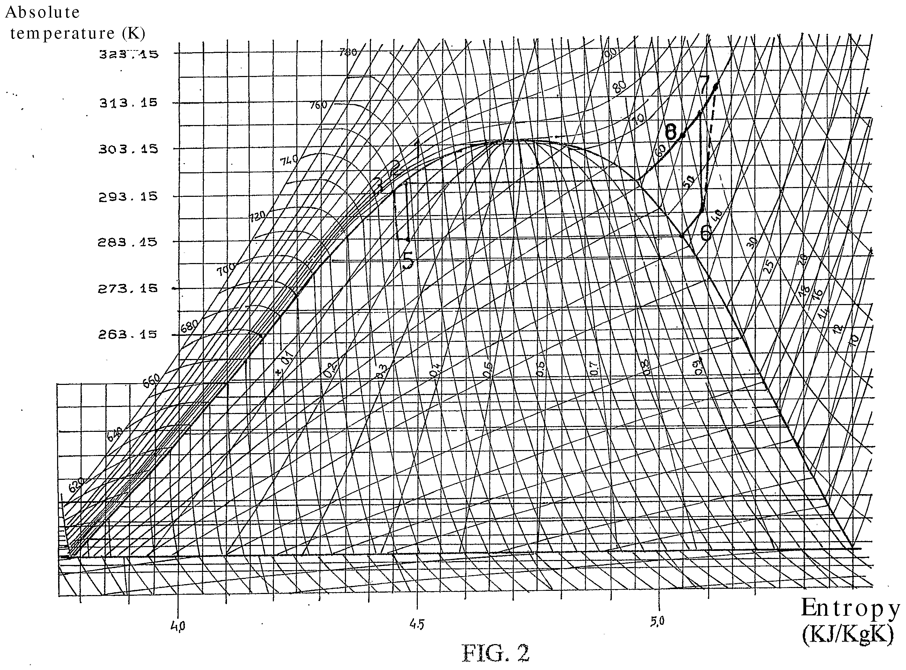

This embodiment is illustrated in the drawings, wherein: Figure 1 shows schematically an apparatus for the removal and separation of the lubricant, Figure 2 is a thermodynamic representation of the operating cycle performed by the apparatus of Figure 1, and Figures 3 and 4 show a heat exchanger for implementing a stage of the above-mentioned cycle.

The diagram of Figure 1 shows an apparatus 19 for removing lubricating oil from swarf and the like by means of liquid or supercritical carbon dioxide, from which the oil is also separated for recovery or disposal; the apparatus can be connected to an external source 20 of liquid CO₂ for the topping-up which is necessary to keep a constant quantity thereof in circulation.

To facilitate an understanding of the operative stages of which the operating cycle of this embodiment is composed, in addition to the main components of the apparatus, a series of points 1 to 9 which identify the starts and finishes of the stages, are also indicated in the diagram of Figure 1. The apparatus 19 comprises a reservoir 21 for the storage of liquid CO₂ in equilibrium with its vapour, at a pressure of from 50-70 bar (preferably about 65 bar); the base of the reservoir, from which the carbon dioxide which circulates through the apparatus emerges, coincides with the starting point 1 of the cycle.

Downstream of the reservoir 21, there is a heat-exchanger 22 for supercooling the CO₂; this exchanger is of known type and serves basically to keep the liquid carbon dioxide in temperature conditions of between 15°C and 30°C, eliminating the presence of any gaseous phase therein, so as to permit greater efficiency of the extraction process.

However, if the apparatus were in a low-temperature environment suitable for achieving the same effect, the exchanger 22 would be superfluous and could therefore be eliminated.

In the diagram of Figure 1, the supercooling stage takes place between points 2 and 3, and the stage of the removal or extraction of the lubricating oils from the swarf takes place between points 3 and 4, and involves two containers 23 and 24. These containers contain the swarf to be treated and, since shut-off valves 25,26, 27 and 29 are disposed upstream and downstream of them, it is possible, in the apparatus 19, to exclude one or other of the containers 23,24 from the circulating CO₂ stream.

It is thus possible, whilst extracting the lubricant from the swarf in one of the containers, to empty and then refill the other container, so as to make optimal use of the apparatus.

Downstream of the containers 23 and 24 there is an expansion valve 28, for allowing the CO₂ to expand with a substantially isoenthalpic transformation to a pressure value of between 40 and 55 bar (preferably 50 bar); this expansion, which takes place between points 4 and 5 in the diagram of Figure 1, is followed by a stage of heating of the CO₂ in an exchanger 30 which will be described in greater detail below.

After passing through the exchanger 30, the carbon dioxide and the lubricating oil form a gaseous phase and a liquid phase, respectively, which are separated in a cyclone 32.

Here, the oil is deposited at the bottom, from where it is then evacuated by means of a valve 33 and a depressurizing container 34, whilst the gaseous CO₂ continues towards a compressor 36.

The compressor brings the CO₂ back to a pressure level of between 50 and 70 bar; the compression stage takes place between points 6, 7 of Figure 1 and, in accordance with this embodiment of the invention, is followed by de-superheating (between points 7 and 8) of the compressed gas, brought about by an exchanger 38 similar to that disposed downstream of the reservoir 21.

The exchanger 38 enables the temperature of the gaseous CO₂ to be reduced before it is condensed; in fact, as can be seen from the Mollier diagram shown in Figure 2, which gives the entropy (in kj/kgK) on the abscissa and the absolute temperature (degrees Kelvin) on the ordinate, upon completion of the compression (point 7 of the cycle) it is in a superheated condition at about 313 K.

This is a technical solution which is also made to prevent a liquid phase and a gaseous phase being present between the intake (point 6) and the output (point 7).

However, in principle, the exchanger 38 could be eliminated or in any case excluded from the CO₂ cycle, since the CO₂ could be cooled along the path downstream of the compressor by exchanging heat with the outside environment in which the apparatus 19 is installed; however, this will also depend on other factors, such as the magnitude of the heat exchanges of the apparatus with the outside environment, or the time required to perform the operating cycle.

The compressed CO₂ is then condensed (from 8 to 9), by heat exchange with the liquid CO₂ which evaporates in the exchanger 30, and returns to the storage reservoir 21.

The execution of the operating cycle for the removal and separation of the lubricant from the swarf performed by the apparatus of Figure 1 can easily be understood from the foregoing description.

Indeed, the properties of liquid or supercritical CO₂ at ambient temperature (20°C-25°C) as a solvent for organic substances such as lubricating oils, are well known.

By performing the washing (points 3 and 4 of the diagram of Figure 1) of the swarf with the CO₂ coming from the reservoir 21 in these conditions, the lubricant is consequently removed from the swarf by being dissolved in the carbon dioxide, from which it can then be separated for recovery or disposal, according to requirements.

The cyclone separator 32 provided in the apparatus 19 performs this function in optimal manner, also by virtue of the heat previously received from the fluid in the exchanger 30.

Since this heat is supplied by the CO₂ itself, which condenses between points 8 and 9 of the cycle, the advantageous energy saving resulting from the reuse of the heat of condensation which would otherwise be lost, is clear.

Furthermore, the advantage over a situation in which the CO₂ were to be heated for being evaporated and its heating were performed by electrical resistors or other means which would require the supply of energy from outside, is even greater; similar remarks also apply if the CO₂ were to be condensed by an external cooling fluid.

Basically it can therefore be said that in the cycle according to the present invention, the mechanical work performed by the compressor 36 is utilized to the maximum since it serves both for circulating the CO₂ in the apparatus 19 (also overcoming the inevitable hydraulic friction) and for supplying energy to the fluid, which is utilized in the form of heat exchanged in the evaporation and condensation stages.

In this context it should be stressed that, in accordance with a preferred embodiment, the exchanger 30 is of the type with plates.

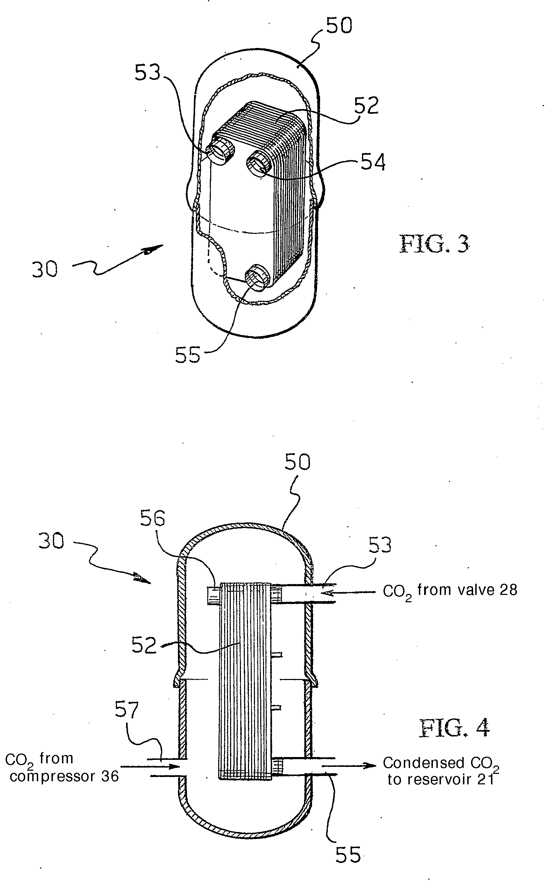

More specifically, as can be seen in Figures 3 and 4 which show the exchanger in a perspective (with a portion removed) and in a side view, respectively, it comprises an outer casing 50 which can withstand the maximum working pressures of the machine and which houses a set of plates 52.

This set is of the type commonly available commercially, for example, such as those produced by Mueller or Alfa-Laval, and has, on one side, three connectors 53,54, and 55, communicating with the exterior of the casing; the first two are intended for admitting to the exchanger the CO₂ which evaporates after point 5 in the apparatus of Figure 1, and for discharging it therefrom, respectively, whereas the third connector is for the outlet of the condensed CO₂ which is then returned to the storage reservoir 21.

On the other side of the set of plates 52, there is a fourth connector 56 from which the CO₂, compressed by the compressor 36 and entered inside the housing 50, passes; the housing 50 is in fact filled with compressed CO₂ (which is also supercooled in this embodiment) coming from point 8 of the apparatus, to which it is connected by means of a manifold 57. The condensing CO₂ and that which is in the evaporation stage thus exchange heat with one another in the exchanger 30, along their respective paths within the set of plates 52 as in normal plate exchangers.

However, since the plates are in the casing 50 at the external compressed CO₂ pressure of 50-70 bar, the pressure of the fluid circulating inside them is compensated; by virtue of this arrangement it is thus possible, in the present invention, to use plate exchangers which would not otherwise be able to withstand the high working pressures required for this application.

It should in fact be pointed out that even the strongest plate exchangers with braze-welded plates are able to operate at working pressures somewhat lower than those indicated above for a cycle of removal and separation with CO₂.

However, they have a large heat-exchange capacity in relation to their fairly small dimensions, particularly when compared with exchangers with tube nests.

In other words, with this embodiment of the invention, in addition to the above-mentioned results in terms of energy saving, the considerable advantage that a limited space is occupied by the parts involved in the heat exchanges necessary for the execution of the cycle is achieved.

It has already been stated above that in some situations one or both of the stages for the supercooling and the de-superheating of the CO₂ could be eliminated or by-passed; similarly, it should be pointed out that the storage reservoir 21 could also be excluded from the circulation of CO₂ when the system is in operation.

This situation is shown schematically by the broken line in Figure 1 which, after point 9, joins the portion downstream of the reservoir 21; a variant of this type enables the flow of carbon dioxide in circulation to be kept constant once the apparatus has been started up to perform a working cycle and the initial transient stage of its operation has passed.

## Claims

1. A method for the removal of substances comprising lubricating oils or similar organic substances from a solid matrix constituted by swarf from machining operations with carbon dioxide in which the substances are soluble, comprising the steps of:
- washing the solid matrix with carbon dioxide in liquid phase in a container (23, 24), so as to obtain a solution formed by the carbon dioxide with the substances dissolved therein,
- expanding the solution through an expansion valve (28) followed by heating it in a heat exchanger (30) so as to evaporate the carbon dioxide and separate it from the substances dissolved therein in a separator (32),
- compressing the evaporated carbon dioxide through a compressor (36) and cooling it to bring it back to the initial liquid phase,
wherein at least some of the heat supplied to heat the solution and some of the heat removed by cooling the carbon dioxide after compression are obtained by providing for a heat exchange between the respective stages of the cycle, wherein the step of the separation of the substances dissolved in the carbon dioxide is carried out with a cyclone separator (32), after the exchange of heat for heating the solution.

2. A method according to Claim 1, wherein for bringing about the heat exchange, the heating temperature of the solution is between 0° C and 20° C, and the cooling temperature of the carbon dioxide is between 15° C and 35° C.

3. A method according to Claim 1 or 2 wherein for bringing about the heat exchange, the heating pressure of the solution is between 40 and 55 bar and the cooling pressure of the carbon dioxide is between 50 and 70 bar.

4. A method according to any one of Claims 1 to 3, wherein the heat exchanger (30) is a plate-type exchanger.

5. Apparatus for carrying out the method according to any one of the preceding claims, comprising a path for the movement of the carbon dioxide along which there are: a container (23, 24) for containing the solid matrix to be treated, a valve (28) for the expansion of the carbon dioxide, a separator (32), and a compressor (36), comprising a heat exchanger (30) which provides for an exchange of heat between a portion of the path of the carbon dioxide disposed between the expansion valve and the separator and a portion downstream of the compressor, wherein the separator (32) is a cyclone separator.

6. Apparatus according to Claim 5, wherein the heat exchanger (30) is a plate-type exchanger.

7. Apparatus according to Claim 6, wherein the heat exchanger (30) comprises an outer casing (50) which communicates with the path of the carbon dioxide and which houses a set of plates (52) through which the solution to be heated and the carbon dioxide to be cooled circulate.

8. Apparatus according to any one of Claims 5 to 7, comprising at least two containers (23, 24) for containing the solid matrix to be treated, the containers being arranged in parallel along the path of the carbon dioxide so as to be used alternately in successive operating cycles.

9. Apparatus according to any one of Claims 5 to 8, comprising a reservoir (21) for the storage of the liquid carbon dioxide in equilibrium with its vapour.

## Patentansprüche

1. Ein Verfahren zur Entfernung von Substanzen, umfassen Schmieröle oder ähnliche organische Substanzen, von einer festen Matrix, die durch Späne von Bearbeitungsvorgängen mit Kohlendioxid gebildet wird, in der die Substanzen löslich sind, umfassend die Schritte:
- Waschen der festen Matrix mit Kohlendioxid in flüssiger Phase in einem Behälter (23, 24), um eine Lösung zu gewinnen, die durch das Kohlendioxid mit den darin gelösten Substanzen gebildet wird,
- Expandieren der Lösung durch ein Expansionsventil (28), gefolgt von deren Erhitzung in einem Wärmetauscher (30), um das Kohlendioxid zu verdampfen und es von den darin gelösten Substanzen in einem Separator (32) zu trennen,
- Verdichten des verdampften Kohlendioxids durch einen Kompressor (36) und Kühlung, um es in die anfängliche flüssige Phase zurückzubringen,
wobei zumindest ein Teil der zur Erhitzung der Lösung zugeführten Wärme und ein Teil der bei der Kühlung des Kohlendioxids nach der Verdichtung abgeführten Wärme durch Bereitstellen eines Wärmetauschers zwischen den jeweiligen Stufen des Zyklus gewonnen wird,
wobei der Schritt der Trennung der im Kohlendioxid gelösten Substanzen mit einem Zyklonabscheider (32) nach dem Austausch von Wärme zur Erhitzung der Lösung ausgeführt wird.

2. Ein Verfahren nach Anspruch 1, wobei zur Herbeiführung des Wärmeaustauschs die Heiztemperatur der Lösung zwischen 0° C und 20° C liegt und die Kühltemperatur des Kohlendioxids zwischen 15° C und 35° C liegt.

3. Ein Verfahren nach Anspruch 1 oder 2, wobei zur Herbeiführung des Wärmeaustauschs der Heizdruck der Lösung zwischen 40 und 55 bar liegt und der Kühldruck des Kohlendioxids zwischen 50 und 70 bar liegt.

4. Ein Verfahren nach einem der Ansprüche 1 bis 3, wobei der Wärmetauscher (30) ein plattenförmiger Tauscher ist.

5. Vorrichtung zur Ausführung des Verfahrens nach einem der vorhergehenden Ansprüche, umfassend einen Pfad für die Bewegung des Kohlendioxids, entlang dessen sich befinden: ein Behälter (23, 24) zur Aufnahme der zu behandelnden festen Matrix, ein Ventil (28) für die Expansion des Kohlendioxids, ein Separator (32) und ein Kompressor (36), umfassend einen Wärmetauscher, der einen Austausch von Wärme zwischen einem Abschnitt des Pfads des Kohlendioxids, der zwischen dem Expansionsventil und dem Separator angeordnet ist, und einem Abschnitt stromabwärts des Kompressors bereitstellt, wobei der Separator (32) ein Zyklonabscheider ist.

6. Vorrichtung nach Anspruch 5, wobei der Wärmetauscher (30) ein plattenförmiger Tauscher ist.

7. Vorrichtung nach Anspruch 6, wobei der Wärmetauscher (30) ein äußeres Gehäuse (50) umfasst, das mit dem Pfad des Kohlendioxids in Verbindung steht, und das einen Satz von Platten (52), durch die die Lösung zur Erhitzung und das Kohlendioxid zur Kühlung zirkulieren, beherbergt.

8. Vorrichtung nach einem der Ansprüche 5 bis 7, umfassend zumindest zwei Behälter (23, 24) zur Aufnahme der zu behandelnden festen Matrix, wobei die Behälter parallel entlang des Pfads des Kohlendioxids angeordnet sind, um abwechselnd in aufeinanderfolgenden Betriebszyklen genutzt zu werden.

9. Vorrichtung nach einem der Ansprüche 5 bis 8, umfassend einen Speicher (21) zur Speicherung des flüssigen Kohlendioxids im Gleichgewicht mit seinem Dampf.

## Revendications

1. Procédé pour l'élimination de substances comprenant des huiles lubrifiantes ou des substances organiques similaires à partir d'une matrice solide constituée de copeaux provenant d'opérations d'usinage avec du dioxyde de carbone dans lequel les substances sont solubles, comprenant les étapes de :
- le lavage de la matrice solide avec du dioxyde de carbone en phase liquide dans un récipient (23, 24), de façon à obtenir une solution formée par le dioxyde de carbone avec les substances dissoutes dans celui-ci,
- la détente de la solution à travers un détendeur (28) suivie du chauffage de celle-ci dans un échangeur de chaleur (30) de façon à évaporer le dioxyde de carbone et séparer celui-ci des substances dissoutes dans celui-ci dans un séparateur (32),
- la compression du dioxyde de carbone évaporé à travers un compresseur (36) et le refroidissement de celui-ci de retour dans la phase liquide initiale,
dans lequel au moins une partie de la chaleur fournie pour chauffer la solution et une partie de la chaleur extraite par refroidissement du dioxyde de carbone après la compression sont obtenues par conduite d'un échange de chaleur entre les étages respectifs du cycle, dans lequel l'étape de la séparation des substances dissoutes dans le dioxyde de carbone est conduite avec un séparateur de type cyclone (32), après l'échange de chaleur pour chauffer la solution.

2. Procédé selon la revendication 1, dans lequel, pour entraîner l'échange de chaleur, la température de chauffage de la solution est comprise entre 0 °C et 20 °C, et la température de refroidissement du dioxyde de carbone est comprise entre 15 °C et 35 °C.

3. Procédé selon la revendication 1 ou 2, dans lequel, pour entraîner l'échange de chaleur, la pression de chauffage de la solution est comprise entre 40 et 55 bar et la pression de refroidissement du dioxyde de carbone est comprise entre 50 et 70 bar.

4. Procédé selon l'une quelconque des revendications 1 à 3, dans lequel l'échangeur de chaleur (30) est un échangeur de type à plaques.

5. Appareil pour conduire le procédé selon l'une quelconque des revendications précédentes, comprenant un trajet pour le déplacement du dioxyde de carbone le long duquel sont disposés : un récipient (23, 24) pour contenir la matrice solide devant être traitée, une vanne (28) pour la détente du dioxyde de carbone, un séparateur (32), et un compresseur (36), comprenant un échangeur de chaleur (30) qui permet un échange de chaleur entre une partie du trajet du dioxyde de carbone disposée entre le détendeur et le séparateur et une partie en aval du compresseur, dans lequel le séparateur (32) est un séparateur de type cyclone.

6. Appareil selon la revendication 5, dans lequel l'échangeur de chaleur (30) est un échangeur de type à plaques.

7. Appareil selon la revendication 6, dans lequel l'échangeur de chaleur (30) comprend un boîtier externe (50) qui communique avec le trajet du dioxyde de carbone et qui contient un ensemble de plaques (52) à travers lequel la solution devant être chauffée et le dioxyde de carbone devant être refroidi circulent.

8. Appareil selon l'une quelconque des revendications 5 à 7, comprenant au moins deux récipients (23, 24) pour contenir la matrice solide devant être traitée, les récipients étant agencés en parallèle le long du trajet du dioxyde de carbone de façon à être utilisés en alternance dans des cycles de fonctionnement successifs.

9. Appareil selon l'une quelconque des revendications 5 à 8, comprenant un réservoir (21) pour le stockage du dioxyde de carbone liquide en équilibre avec sa vapeur.
